# EUROPEAN PATENT APPLICATION

(11) **EP 3 343 721 A1**
(43) Date of publication of application: **04.07.2018**
(21) Application number: 16207438.9
(22) Date of filing: 30.12.2016
(51) Int. Cl.: H02J 5/00, H02J 7/02, H02J 50/40

(54) **WIRELESS CHARGING MANAGEMENT SYSTEM AND METHOD**

(71) Applicant: HTC Corporation, Taoyuan City 330 (TW)
(72) Inventor: Chu, Feng-Seng, 330 Taoyuan City (TW)
(74) Representative: Murgitroyd & Company

(57) **Abstract**

The present invention provides a remote management system and a remote management method for wireless charging. The remote management system comprises: a gateway, and a plurality of wireless chargers. The gateway comprises a communication circuit for sending a new password and an enable signal to a plurality of wireless chargers, and sending a message to all the wireless chargers respectively to enable the new password for all the wireless chargers if the communication circuit of the gateway receives a plurality of feedback signals indicating the new password and the enable signal are received by all the wireless chargers. Each wireless charger comprises a communication circuit for sending the feedback signal to the gateway if the communication circuit of the wireless charger receives the new password and the enable signal sent from the gateway.

## Description

### Background of the Invention

### 1. Field of the Invention

The present invention relates to a remote management system and a remote management method for wireless charging, and more particularly, to a remote management system and a remote management method for wireless charging capable of remotely and simultaneously changing the connection password used by a gateway and its underlying wireless chargers.

### 2. Description of the Prior Art

Wireless Power Consortium (WPC) and air fuel alliance (AFA) are two leading organizations in the world for developing wireless charging standard. The document "The Qi Wireless Power Transfer System - Power Class 0 Specification" released in April 2016 describes the interaction between a wireless power transmitter (PTX) and a wireless power receiver (PRX). In this specification, Wireless charging network is a network in which every node denotes a wireless charger. In most cases, each wireless charger is connected to a gateway and the gateway is connected to a server. It means every gateway is response for managing a set of nearby wireless chargers, and for security reason, it is required to change the connection password used by the gateway and its underlying wireless chargers. By this specification, manufacturers can produce wireless charger which can provide wireless power to all the receivers which support the same specification. However, if a lot of wireless chargers are deployed in many stores, it might be important to find a way to manage them remotely since there is no user interface on the wireless charger. One design is to install a gateway which is connected to a server in every store and ask each wireless charger to connect to the gateway. Then a user can manage each wireless charger from the server through the gateway. Usually, the connection between the server and the gateway is via wire communication, but the connection between the gateway and wireless charger is via wireless communication. The resulting architecture is as follows. For security reason, normally only the charge is allowed to connect to the gateway. It implies there should be a password for establishing the connection between the gateway and the wireless charger. If the user needs to change this password, one possible way is to go to every store to reset the password for every wireless charger and the gateway. However, it will be too time consuming. A more feasible way is to change this password from the server, it means nobody needs to go to the store but just press some keys remotely to complete the job. Although it is an attractive scenario, but there exist some challenges. At first, the gateway and the wireless chargers need to change the password simultaneously, or the connection will be failed. The second, all the wireless chargers need to be updated at the same time, or some wireless chargers will lose the connection to the gateway. It implies that if the password update is failed for only one wireless charger or certain wireless chargers, but is completed for the gateway and the other wireless chargers, then the only one wireless charger or the certain wireless chargers will never be able to connect back to the gateway.

### Summary of the Invention

It is therefore one of the objectives of the disclosure to provide a remote management system and a remote management method for wireless charging capable of remotely and simultaneously changing the connection password used by a gateway and its underlying wireless chargers, so as to solve the problem mentioned above.

In accordance with an example of the present invention, a remote management system for wireless charging is disclosed. The remote management system comprises: a gateway and a plurality of wireless chargers. The gateway comprises a communication circuit for sending a new password to a plurality of wireless chargers, and sending an enable signal to all the wireless chargers respectively if the communication circuit of the gateway receives a plurality of first feedback signals indicating the new password is received by all the wireless chargers. Each wireless charger comprises a communication circuit for sending the first feedback signal to the gateway if the communication circuit of the wireless charger receives the new password sent from the gateway, and sending a second feedback signal to the gateway if the communication circuit of the wireless charger receives the enable signal from the gateway; wherein if the communication circuit of the gateway receives the second feedback signals indicating the enable signal is received by all the wireless chargers, the communication circuit of the gateway sends a message to all the wireless chargers respectively to enable the new password for all the wireless chargers.

In accordance with an example of the present invention, a remote management method for wireless charging is disclosed. The remote management method comprises: utilizing a communication circuit of a gateway to send a new password to a plurality of wireless chargers, and send an enable signal to all the wireless chargers respectively if the communication circuit of the gateway receives a plurality of first feedback signals indicating the new password is received by all the wireless chargers; and utilizing a communication circuit of each wireless charger to send the first feedback signal to the gateway if the communication circuit of the wireless charger receives the new password sent from the gateway, and send a second feedback signal to the gateway if the communication circuit of the wireless charger receives the enable signal from the gateway; utilizing the communication circuit of the gateway to send a message to all the wireless chargers respectively to enable the new password for all the wireless chargers if the communication circuit of the gateway receives the second feedback signals indicating the enable signal is received by all the wireless chargers.

In accordance with an example of the present invention, a remote management system for wireless charging is disclosed. A remote management system comprises: a gateway, and a plurality of wireless chargers. The gateway comprises a communication circuit sending a new password and an enable signal to a plurality of wireless chargers, and sending a message to all the wireless chargers respectively to enable the new password for all the wireless chargers if the communication circuit of the gateway receives a plurality of feedback signals indicating the new password and the enable signal are received by all the wireless chargers. Each wireless charger comprises a communication circuit for sending the feedback signal to the gateway if the communication circuit of the wireless charger receives the new password and the enable signal sent from the gateway.

Briefly summarized, the remote management system and the remote management method for wireless charging disclosed by the present invention are capable of remotely and simultaneously changing the connection password used by a gateway and its underlying wireless chargers via a server.

### Brief Description of the Drawings

FIG. 1 is a simplified block diagram of a remote management system for wireless charging in accordance with a first example of the present invention.
FIG. 2 is a flowchart showing a method in accordance with operation schemes of the remote management system in FIG. 1.
FIG. 3 is a simplified block diagram of a remote management system for wireless charging in accordance with a second example of the present invention.
FIG. 4 is a flowchart showing a method in accordance with operation schemes of the remote management system in FIG. 3.

### Detailed Description

Certain terms are used throughout the description and following claims to refer to particular components. As one skilled in the art will appreciate, manufacturers may refer to a component by different names. This document does not intend to distinguish between components that differ in name but not function. In the following description and in the claims, the terms "include" and "comprise" are used in an open-ended fashion, and thus should be interpreted to mean "include, but not limited to". Also, the term "couple" is intended to mean either an indirect or direct electrical connection. Accordingly, if one device is coupled to another device, that connection may be through a direct electrical connection, or through an indirect electrical connection via other devices and connections.

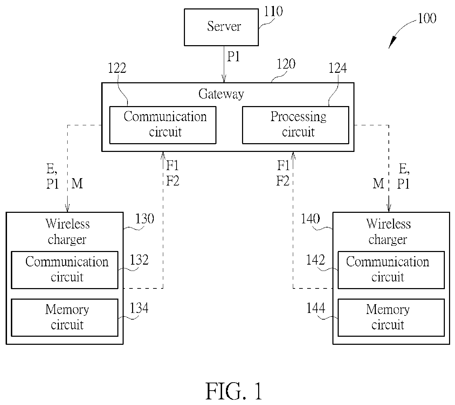

Please refer to FIG. 1. FIG. 1 is a simplified block diagram of a remote management system 100 for wireless charging in accordance with a first example of the present invention. As shown in FIG. 1, the remote management system 100 may comprise: a server 110, a gateway 120, and two wireless chargers 130, 140, wherein the wireless chargers 130, 140 are utilized for charging mobile devices such as smart phones, tablets, smart watches, smart glasses, personal digital assistants (PDA), lap top computers, digital cameras, music players, and game devices, etc. The server 110 may be utilized for sending a new password P1 to the gateway 120, wherein the server 110 may be a computer or a group of computers, which has the capability to manage the wireless chargers and the mobile devices, and the new password P1 is utilized in connection between the gateway 120 and the wireless chargers 130, 140, wherein the new password P1 may be a AES key for a WiFi connection or a passcode for a Bluetooth connection. In addition, the server 110 may be further utilized for sending IDs of the wireless chargers 130, 140 to the gateway 120 be wherein the IDs of the wireless chargers 130, 140 may be serial numbers of the wireless chargers 130, 140. Please note that the above example is only for an illustrative purpose and is not meant to be a limitation of the present invention. For example, the server 110 also may be an optional element for the remote management system 100 according to different design requirement, that is, the server 110 also may be an external element of the remote management system 100 according to different design requirement.

The gateway 120 is coupled to the server 110, and comprises a communication circuit 122 and a processing circuit 124, wherein the communication circuit 122 may be a WiFi module or a Bluetooth module. The wireless charger 130 comprises a communication circuit 132 and a memory circuit 134, wherein the communication circuit 132 may be a part of a wireless power transmitter (PTX) of the wireless charger 130. The wireless charger 140 comprises a communication circuit 142 and a memory circuit 144, wherein the communication circuit 132 may be a part of a PTX of the wireless charger 140.

The communication circuit 122 is utilized for receiving the new password P1 from the server 110 and sending the new password P1 to the wireless chargers 130, 140, and sending an enable signal E to both the wireless chargers 130, 140 respectively if the communication circuit 122 of the gateway 120 receives two first feedback signals F1 indicating the new password P1 is received by both the wireless chargers 130, 140. In addition, if the communication circuit 122 of the gateway 120 does not receive at least one of the first feedback signals F1 from at least one of the wireless chargers 130, 140, the communication circuit 122 of the gateway 120 will continue to send the new password P1 to the at least one of the wireless chargers 130, 140. For example, if the communication circuit 122 of the gateway 120 receive the first feedback signal F1 from the wireless charger 130, but does not receive the first feedback signal F1 from the wireless charger 140, the communication circuit 122 of the gateway 120 will not send the enable signal E to both the wireless chargers 130, 140 but continue to send the new password P1 to the wireless charger 140.

The communication circuit 132 is utilized for sending the first feedback signal F1 to the gateway 120 if the communication circuit 132 of the wireless charger receives the new password P1 sent from the gateway 120, and sending a second feedback signal F2 to the gateway 120 if the communication circuit 132 of the wireless charger 130 receives the enable signal E from the gateway 120. In addition, the memory circuit 134 may be utilized for storing the new password P1 when the communication circuit 132 of the wireless charger 130 receives the new password P1.

The communication circuit 142 is utilized for sending the first feedback signal F1 to the gateway 120 if the communication circuit 142 of the wireless charger 140 receives the new password P1 sent from the gateway 120, and sending a second feedback signal F2 to the gateway 120 if the communication circuit 142 of the wireless charger 140 receives the enable signal E from the gateway 120. In addition, the memory circuit 144 may be utilized for storing the new password P1 when the communication circuit 142 of the wireless charger 140 receives the new password P1.

Next, if the communication circuit 122 of the gateway 120 receives the two second feedback signals F2 indicating the enable signal E is received by both the wireless chargers 130, 140, the communication circuit 122 of the gateway 120 will send a message M to both the wireless chargers 130, 140 respectively to enable the new password P1 for both the wireless chargers 130, 140. In addition, if the communication circuit 122 of the gateway 120 does not receive at least one of the second feedback signals F2 from at least one of the wireless chargers 130, 140, the communication circuit 122 of the gateway 120 will continue to send the enable signal E to the at least one of the wireless chargers 130, 140. For example, if the communication circuit 122 of the gateway 120 receive the second feedback signal F2 from the wireless charger 130, but does not receive the second feedback signal F2 from the wireless charger 140, the communication circuit 122 of the gateway 120 will not send the message M to both the wireless chargers 130, 140 but continue to send the enable signal E to the wireless charger 140.

Next, the processing circuit 124 is utilized for restarting the communication circuit 122 of the gateway 120 after the communication circuit 122 of the gateway 120 sends the message to all the wireless chargers 130, 140 respectively to enable the new password P1 for all the wireless chargers 130, 140, wherein after the processing circuit 124 of the gateway 120 restarts the communication circuit 122 of the gateway 120, the communication circuits 132 of the wireless charger 130 re-establishes the connection with the communication circuit 122 of the gateway 120 by using the new password P1, and the communication circuits 142 of the wireless charger 140 re-establishes the connection with the communication circuit 122 of the gateway 120 by using the new password P1, too. In addition, if the wireless charger 130 is not capable of connecting to the gateway 120 by using the new password P1, it will come back to use an old password or an original password to establish the connection. Similarly, if the wireless charger 140 is not capable of connecting to the gateway 120 by using the new password P1, it will also come back to use an old password or an original password to establish the connection. Moreover, if the gateway 120 finds that the wireless charger 130 does not reconnect back, the gateway 120 will reports this condition to the server 110. Similarly, the gateway 120 finds that the wireless charger 140 does not reconnect back, the gateway 120 will reports this condition to the server 110.

Please note that the above example is only for an illustrative purpose and is not meant to be a limitation of the present invention. For example, the quantity of the wireless chargers can be changed to any number according to different design requirements.

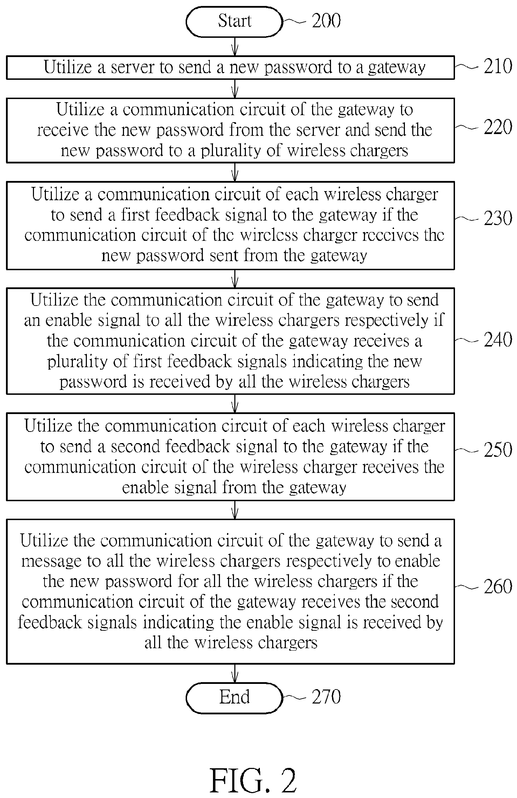

Please refer to FIG. 2. FIG. 2 is a flowchart showing a method in accordance with operation schemes of the remote management system 100 in the above example. Provided that the result is substantially the same, the steps in FIG. 2 are not required to be executed in the exact order shown in FIG. 2. The remote management method in accordance with the above example of the remote management system 100 in the present invention comprises the following steps:
Step 200: Start.
Step 210: Utilize a server to send a new password to a gateway.
Step 220: Utilize a communication circuit of the gateway to receive the new password from the server and send the new password to a plurality of wireless chargers.
Step 230: Utilize a communication circuit of each wireless charger to send a first feedback signal to the gateway if the communication circuit of the wireless charger receives the new password sent from the gateway.
Step 240: Utilize the communication circuit of the gateway to send an enable signal to all the wireless chargers respectively if the communication circuit of the gateway receives a plurality of first feedback signals indicating the new password is received by all the wireless chargers.
Step 250: Utilize the communication circuit of each wireless charger to send a second feedback signal to the gateway if the communication circuit of the wireless charger receives the enable signal from the gateway.
Step 260: Utilize the communication circuit of the gateway to send a message to all the wireless chargers respectively to enable the new password for all the wireless chargers if the communication circuit of the gateway receives the second feedback signals indicating the enable signal is received by all the wireless chargers.
Step 270: End

In another example, the remote management method may further comprise an additional step of utilizing a memory circuit of each wireless charger to store the new password when each wireless charger receives the new password. In addition, after the Step 230, the remote management method may further comprise an additional step of utilizing the communication circuit of the gateway to keep sending the new password to the at least one of the wireless charger if the communication circuit of the gateway does not receive at least one of the first feedback signals from at least one of the wireless chargers. After the Step 250, the remote management method may further comprise an additional step of utilizing the communication circuit of the gateway to keep sending the enable signal to the at least one of the wireless chargers if the communication circuit of the gateway does not receive at least one of the second feedback signals from at least one of the wireless chargers.

In another example, after Step 260, the remote management method may further comprise an additional step of utilizing a processing circuit of the gateway to restart the communication circuit of the gateway after the communication circuit of the gateway sends the message to all the wireless chargers respectively to enable the new password for all the wireless chargers. Next, the remote management method also may further comprise an additional step of utilizing the communication circuits of the wireless chargers re-establish connection with the communication circuit of the gateway by using the new password after the processing circuit of the gateway restarts the communication circuit of the gateway.

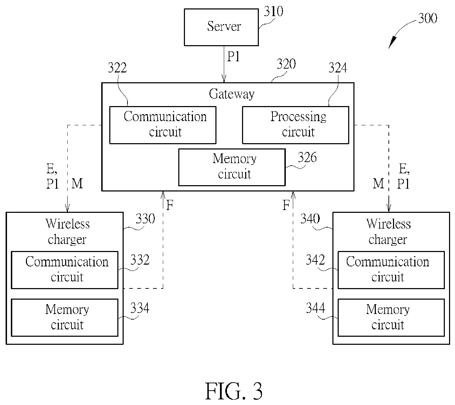

Please refer to FIG. 3. FIG. 3 is a simplified block diagram of a remote management system 300 for wireless charging in accordance with a second example of the present invention. As shown in FIG. 3, the remote management system 300 may comprise: a server 310, a gateway 320, and two wireless chargers 330, 340, wherein the wireless chargers 330, 340 are utilized for charging mobile devices such as smart phones, tablets, smart watches, smart glasses, personal digital assistants (PDA), lap top computers, digital cameras, music players, and game devices, etc. The server 310 may be utilized for sending a new password P1 to the gateway 320, wherein the server 310 may be a computer or a group of computers, which has the capability to manage the wireless chargers and the mobile devices, and the new password P1 is utilized in connection between the gateway 320 and the wireless chargers 330, 340, wherein the new password P1 may be a AES key for a WiFi connection or a passcode for a Bluetooth connection. In addition, the server 310 may be further utilized for sending IDs of the wireless chargers 330, 340 to the gateway 320 be wherein the IDs of the wireless chargers 330, 340 may be serial numbers of the wireless chargers 330, 340. Please note that the above example is only for an illustrative purpose and is not meant to be a limitation of the present invention. For example, the server 310 also may be an optional element for the remote management system 300 according to different design requirement, that is, the server 310 also may be an external element of the remote management system 300 according to different design requirement.

The gateway 320 is coupled to the server 310, and comprises a communication circuit 322, a processing circuit 324, and a memory circuit 326, wherein the communication circuit 322 may be a WiFi module or a Bluetooth module. The memory circuit 326 may be utilized for storing the new password P1 when the gateway receives the new password P1 from the server 310. The wireless charger 330 comprises a communication circuit 332 and a memory circuit 334, wherein the communication circuit 332 may be a part of a wireless power transmitter (PTX) of the wireless charger 330. The wireless charger 340 comprises a communication circuit 342 and a memory circuit 344, wherein the communication circuit 332 may be a part of a PTX of the wireless charger 340.

The communication circuit 322 is utilized for receiving the new password P1 from the server 310 and sending the new password P1 and an enable signal E to the wireless chargers 330, 340, and sending a message M to both the wireless chargers 330, 340 respectively to enable the new password P1 for both the wireless chargers 330, 340 if the communication circuit 322 of the gateway 320 receives two feedback signals F indicating the new password P1 and the enable signal E are received by both the wireless chargers 330, 340. In addition, if the communication circuit 322 of the gateway 320 does not receive at least one of the feedback signals F from at least one of the wireless chargers 330, 340, the communication circuit 322 of the gateway 320 will continue to send the new password P1 and the enable signal E to the at least one of the wireless chargers 330, 340. For example, if the communication circuit 322 of the gateway 320 receive the feedback signal F from the wireless charger 330, but does not receive the feedback signal F from the wireless charger 340, the communication circuit 322 of the gateway 320 will not send the message M to both the wireless chargers 330, 340 but continue to send the new password P1 and the enable signal E to the wireless charger 340.

The communication circuit 332 is utilized for sending the feedback signal F to the gateway 320 if the communication circuit 332 of the wireless charger receives the new password P1 and the enable signal E sent from the gateway 320. In addition, the memory circuit 334 may be utilized for storing the new password P1 when the communication circuit 332 of the wireless charger 330 receives the new password P1. The communication circuit 342 is utilized for sending the feedback signal F to the gateway 320 if the communication circuit 342 of the wireless charger 340 receives the new password P1 and the enable signal E sent from the gateway 320. In addition, the memory circuit 344 may be utilized for storing the new password P1 when the communication circuit 342 of the wireless charger 340 receives the new password P1.

Next, the processing circuit 324 is utilized for restarting the communication circuit 322 of the gateway 320 after the communication circuit 322 of the gateway 320 sends the message to all the wireless chargers 330, 340 respectively to enable the new password P1 for all the wireless chargers 330, 340, wherein after the processing circuit 324 of the gateway 320 restarts the communication circuit 322 of the gateway 320, the communication circuits 332 of the wireless charger 330 re-establishes the connection with the communication circuit 322 of the gateway 320 by using the new password P1, and the communication circuits 342 of the wireless charger 340 re-establishes the connection with the communication circuit 322 of the gateway 320 by using the new password P1, too. In addition, if the wireless charger 330 is not capable of connecting to the gateway 320 by using the new password P1, it will come back to use an old password or an original password to establish the connection. Similarly, if the wireless charger 340 is not capable of connecting to the gateway 320 by using the new password P1, it will also come back to use an old password or an original password to establish the connection. Moreover, if the gateway 320 finds that the wireless charger 330 does not reconnect back, the gateway 320 will reports this condition to the server 310. Similarly, the gateway 320 finds that the wireless charger 340 does not reconnect back, the gateway 320 will reports this condition to the server 310.

Please note that the above example is only for an illustrative purpose and is not meant to be a limitation of the present invention. For example, the quantity of the wireless chargers can be changed to any number according to different design requirements.

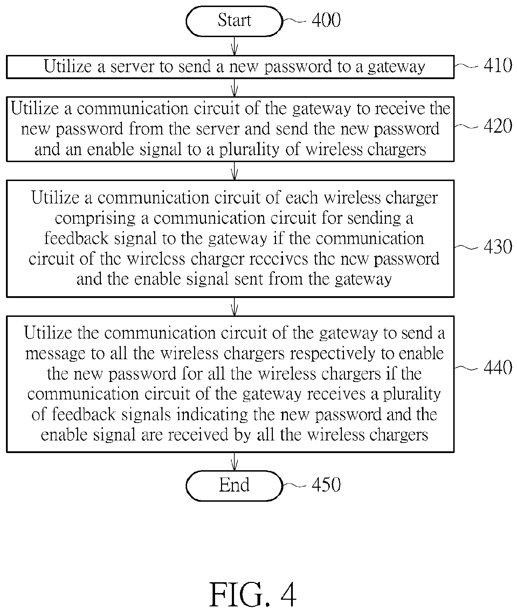

Please refer to FIG. 4. FIG. 4 is a flowchart showing a method in accordance with operation schemes of the remote management system 300 in the above example. Provided that the result is substantially the same, the steps in FIG. 4are not required to be executed in the exact order shown in FIG. 4. The remote management method in accordance with the above example of the remote management system 300 in the present invention comprises the following steps:
Step 400: Start.
Step 410: Utilize a server to send a new password to a gateway.
Step 420: Utilize a communication circuit of the gateway to receive the new password from the server and send the new password and an enable signal to a plurality of wireless chargers.
Step 430: Utilize a communication circuit of each wireless charger comprising a communication circuit for sending a feedback signal to the gateway if the communication circuit of the wireless charger receives the new password and the enable signal sent from the gateway.
Step 440: Utilize the communication circuit of the gateway to send a message to all the wireless chargers respectively to enable the new password for all the wireless chargers if the communication circuit of the gateway receives a plurality of feedback signals indicating the new password and the enable signal are received by all the wireless chargers.
Step 450: End

In another example, the remote management method may further comprise an additional step of utilizing a memory circuit of the gateway to store the new password when the gateway receives the new password from the server. In addition, after the Step 430, the remote management method may further comprise an additional step of utilizing the communication circuit of the gateway to keep sending the new password and the enable signal to the at least one of the wireless charger if the communication circuit of the gateway does not receive at least one of the feedback signals from at least one of the wireless chargers. In another example, after Step 260, the remote management method may further comprise an additional step of utilizing a processing circuit of the gateway to restart the communication circuit of the gateway after the communication circuit of the gateway sends the message to all the wireless chargers respectively to enable the new password for all the wireless chargers. Next, the remote management method also may further comprise an additional step of utilizing the communication circuits of the wireless chargers re-establish connection with the communication circuit of the gateway by using the new password after the processing circuit of the gateway restarts the communication circuit of the gateway.

Briefly summarized, the remote management system and the remote management method for wireless charging disclosed by the present invention are capable of remotely and simultaneously changing the connection password used by a gateway and its underlying wireless chargers.

## Claims

1. A remote management system for wireless charging, comprising:
a gateway, comprising a communication circuit for sending a new password to a plurality of wireless chargers, and sending an enable signal to all the wireless chargers respectively if the communication circuit of the gateway receives a plurality of first feedback signals indicating the new password is received by all the wireless chargers; and
the wireless chargers, each wireless charger comprising a communication circuit for sending the first feedback signal to the gateway if the communication circuit of the wireless charger receives the new password sent from the gateway, and sending a second feedback signal to the gateway if the communication circuit of the wireless charger receives the enable signal from the gateway;
wherein if the communication circuit of the gateway receives the second feedback signals indicating the enable signal is received by all the wireless chargers, the communication circuit of the gateway sends a message to all the wireless chargers respectively to enable the new password for all the wireless chargers.

2. The remote management system of claim 1, wherein the gateway is coupled to a server, and the new password is provided by the server.

3. The remote management system of claim 2, wherein the server is further utilized for sending IDs of the wireless chargers to the gateway.

4. The remote management system according to any one of the preceding claims, wherein if the communication circuit of the gateway does not receive at least one of the first feedback signals from at least one of the wireless chargers, the communication circuit of the gateway keeps sending the new password to the at least one of the wireless chargers.

5. The remote management system according to any one of the preceding claims, wherein if the communication circuit of the gateway does not receive at least one of the second feedback signals from at least one of the wireless chargers, the communication circuit of the gateway keeps sending the enable signal to the at least one of the wireless chargers.

6. The remote management system according to any one of the preceding claims, wherein the gateway further comprises a processing circuit for restarting the communication circuit of the gateway after the communication circuit of the gateway sends the message to all the wireless chargers respectively to enable the new password for all the wireless chargers.

7. The remote management system of claim 6, wherein after the processing circuit of the gateway restarts the communication circuit of the gateway, the communication circuits of the wireless chargers re-establish connection with the communication circuit of the gateway by using the new password.

8. A remote management method for wireless charging, comprising:
utilizing a communication circuit of a gateway to send a new password to a plurality of wireless chargers, and send an enable signal to all the wireless chargers respectively if the communication circuit of the gateway receives a plurality of first feedback signals indicating the new password is received by all the wireless chargers,
utilizing a communication circuit of each wireless charger to send the first feedback signal to the gateway if the communication circuit of the wireless charger receives the new password sent from the gateway, and send a second feedback signal to the gateway if the communication circuit of the wireless charger receives the enable signal from the gateway; and
utilizing the communication circuit of the gateway to send a message to all the wireless chargers respectively to enable the new password for all the wireless chargers if the communication circuit of the gateway receives the second feedback signals indicating the enable signal is received by all the wireless chargers.

9. The remote management method of claim 8, further comprising:
utilizing a processing circuit of the gateway to restart the communication circuit of the gateway after the communication circuit of the gateway sends the message to all the wireless chargers respectively to enable the new password for all the wireless chargers.

10. The remote management method of claim 9, further comprising:
utilizing the communication circuits of the wireless chargers re-establish connection with the communication circuit of the gateway by using the new password after the processing circuit of the gateway restarts the communication circuit of the gateway.

11. A remote management system for wireless charging, independently or according to claim 1, comprising:
a gateway, comprising a communication circuit for sending a new password and an enable signal to a plurality of wireless chargers, and sending a message to all the wireless chargers respectively to enable the new password for all the wireless chargers if the communication circuit of the gateway receives a plurality of feedback signals indicating the new password and the enable signal are received by all the wireless chargers; and
the wireless chargers, each wireless charger comprising a communication circuit for sending the feedback signal to the gateway if the communication circuit of the wireless charger receives the new password and the enable signal sent from the gateway.

12. The remote management system of claim 11, wherein the gateway is coupled to a server, and the new password is provided by the server.

13. The remote management system of claim 11 or 12, wherein if the communication circuit of the gateway does not receive at least one of the feedback signals from at least one of the wireless chargers, the communication circuit of the gateway keeps sending the new password and the enable signal to the at least one of the wireless chargers.

14. The remote management system according to any one of the preceding claims 11 to 13, wherein the gateway further comprises a processing circuit for restarting the communication circuit of the gateway after the communication circuit of the gateway sends the message to all the wireless chargers respectively to enable the new password for all the wireless chargers.

15. The remote management system of claim 14, wherein after the processing circuit of the gateway restarts the communication circuit of the gateway, the communication circuits of the wireless chargers re-establish connection with the communication circuit of the gateway by using the new password.
